# EUROPEAN PATENT APPLICATION

(11) **EP 4 530 254 A1**
(43) Date of publication of application: **02.04.2025**
(21) Application number: 24202900.7
(22) Date of filing: 26.09.2024
(51) Int. Cl.: C01B 33/18, C08K 9/06, C08J 3/215

(54) **SURFACE MODIFICATION OF SILICA IN HYDROCARBON SOLVENT**

(30) Priority: 29.09.2023 US 202318477641
(71) Applicant: The Goodyear Tire & Rubber Company, Akron, OH 44316 (US)
(72) Inventor: YAN, Yuan-Yong, Copley 44321 (US); ATTAREB, Gamil Gamal, Cuyahoga Falls 44221 (US); HAHN, Bruce Raymond, Hudson 44210 (US)
(74) Representative: Kutsch, Bernd

(57) **Abstract**

A process for producing a stable solution comprising silica in a hydrocarbon solvent is disclosed. The process comprises ultrasonically mixing silica and a silane in the hydrocarbon solvent. Also, process for producing a surface-modified silica is disclosed, the process comprises: ultrasonically mixing silica and a silane in a hydrocarbon solvent to form a solution; and drying the solution to obtain the surface-modified silica.

## Description

### BACKGROUND

Silica is hydrophilic and therefore does not easily disperse in hydrocarbon solvents. For example, silica is immiscible in hexane by conventional mixing methods.

It would be desirable to develop new methods for producing stable solutions of silica in hydrocarbon solvents (e.g., for applications such as obtaining surface-modified silica and producing masterbatches), new methods for producing surface-modified silicas, and new methods for producing silica-rubber (e.g., silica-SSBR) masterbatches.

### SUMMARY OF THE INVENTION

The invention relates to a process in accordance with claim 1, 2 or 3, respectively, to a stable solution in accordance with claim 10 and to a surface-modified silica in accordance with claim 11.

Dependent claims refer to preferred embodiments of the invention.

In one preferred aspect of the invention, an ultrasonic vibration system is used to promote a silanization reaction between silica and a silane in a hydrocarbon solvent. The produced solution is stable.

The solution may be directly dried to produce a surface-modified silica (like COUPSIL^{®} or AGILON^{®} products from Evonik and PPG, respectively). Alternatively, the solution may be mixed with a polymer cement to generate a silica/polymer masterbatch.

The technique of this process method can be used to incorporate silica into virtually any type of rubbery polymer (elastomer). For instance, the rubbery polymer can be natural rubber, synthetic polyisoprene rubber, polybutadiene rubber, isoprene-butadiene rubber (IBR), styrene butadiene rubber (SBR), styrene-isoprene rubber (SIR), styrene-isoprene-butadiene rubber (SIBR), or some other type of conventional polydiene rubber.

Disclosed, in some embodiments, is a process for producing a stable solution containing silica in a hydrocarbon solvent. The process includes ultrasonically mixing silica and a silane in the hydrocarbon solvent. In some embodiments, the hydrocarbon solvent is an alkane (e.g., hexane, or cyclo-hexane). Ultrasonic mixing may be performed for a time period of from 1 to 40 minutes (e.g., from 10 to 40 minutes) and/or at room temperature. The silane may be a triethoxysilane. In some embodiments, the silane is triethoxy(octyl)silane, 1,8-bistriethoxysilyloctane, (3-glycidoxypropyl)methyldiethoxysilane, (3-aminopropyl)triethoxysilane, N-(3-triethoxysilylpropyl)4,5-dihydroimidazole, (3-triethoxysilyl)propylsuccinic anhydride, N-(triethoxysilylpropyl)-O-polyethylene oxide urethane, (3-mercaptopropyl)-triethoxysilane, S-(octanol)mercaptopropyltriethoxysilane, bis[3-(triethoxysilyl)-propyl]disulfide and/or bis[3-(triethoxysilyl)propyl]tetrasulfide. A solution produced by the process is also disclosed.

Disclosed, in other embodiments, is a process for producing a surface-modified silica. The process includes ultrasonically mixing silica and a silane in a hydrocarbon solvent to form a solution; and drying the solution to obtain the surface-modified silica. In some embodiments, the hydrocarbon solvent includes an alkane (e.g., hexane, or cyclo-hexane). The silane may comprise triethoxy(octyl)silane, 1,8-bistriethoxysilyloctane, (3-glycidoxypropyl)methyldiethoxysilane, (3-aminopropyl)-triethoxysilane, N-(3-triethoxysilylpropyl)4,5-dihydroimidazole, (3-triethoxysilyl)-propylsuccinic anhydride, N-(triethoxysilylpropyl)-O-polyethylene oxide urethane, (3-mercaptopropyl)triethoxysilane, S-(octanol)mercaptopropyltriethoxysilane, bis[3-(triethoxysilyl)propyl]disulfide and/or bis[3-(triethoxysilyl)-propyl]tetrasulfide. A surface-modified silica produced by the process is also disclosed.

Disclosed, in further embodiments, is a process for preparing a masterbatch. The process includes ultrasonically mixing silica and a silane in a hydrocarbon solvent to form a solution; mixing the solution and a polymer cement to form a mixture; and drying the mixture to form the masterbatch. The polymer cement may include a rubber selected from the group consisting of natural rubber, synthetic polyisoprene rubber, polybutadiene rubber, isoprene-butadiene rubber (IBR), styrene butadiene rubber (SBR), styrene-isoprene rubber (SIR), and styrene-isoprene-butadiene rubber (SIBR). In some embodiments , the solvent includes an alkane (e.g., hexane, or cyclo-hexane). In some embodiments, the silane comprises triethoxy(octyl)silane, 1,8-bistriethoxysilyloctane, (3-glycidoxypropyl)methyl-diethoxysilane, (3-aminopropyl)-triethoxysilane, N-(3-triethoxysilylpropyl)4,5-dihydroimidazole, (3-triethoxysilyl)-propylsuccinic anhydride, N-(triethoxysilylpropyl) -O-polyethylene oxide urethane, (3-mercaptopropyl)triethoxysilane, S-(octanol)-mercaptopropyltriethoxysilane, bis[3-(triethoxysilyl)propyl]disulfide and/or bis[3-(triethoxysilyl)propyl]tetrasulfide. The mixing may be performed for a period of from 30 to 60 minutes. A masterbatch produced by the process is also disclosed.

Disclosed, in some embodiments, is a process for preparing a masterbatch. The process includes ultrasonically mixing silica and a silane in a hydrocarbon solvent to form a solution; mixing the solution and a polymer cement to form a mixture; and drying the mixture to form the masterbatch.

The polymer cement may include at least one rubber selected from: natural rubber, synthetic polyisoprene rubber, polybutadiene rubber, isoprene-butadiene rubber (IBR), styrene butadiene rubber (SBR), styrene-isoprene rubber (SIR), and styrene-isoprene-butadiene rubber (SIBR). In some embodiments, the hydrocarbon solvent includes an alkane. The hydrocarbon solvent may include hexane or cyclohexane. In some embodiments, the silane includes a triethoxysilane. The silane may include triethoxy(octyl)silane, 1,8-bistriethoxysilyloctane, (3-glycidoxypropyl)methyldiethoxysilane, (3-aminopropyl)triethoxysilane, N-(3-triethoxysilylpropyl)4,5-dihydroimidazole, (3-triethoxysilyl)propylsuccinic anhydride, N-(triethoxysilylpropyl)-O-polyethylene oxide urethane, (3-mercaptopropyl)triethoxysilane, S-(octanol)mercaptopropyltriethoxysilane, bis[3-(triethoxysilyl)propyl]disulfide and/or bis[3-(triethoxysilyl)propyl]tetrasulfide. In some embodiments, the solution and the polymer cement are mixed for a period of from 30 to 60 minutes. The ultrasonic mixing may be performed for a period of from 1 to 40 minutes. In some embodiments, the ultrasonic mixing is performed at room temperature. A masterbatch formed by the process is also disclosed.

Disclosed, in other embodiments, is a process for preparing a masterbatch. The process includes mixing a solution containing a surface-modified silane in a hydrocarbon solvent with a polymer cement to form a mixture; and drying the mixture to form the masterbatch. The polymer cement may include at least one rubber selected from natural rubber, synthetic polyisoprene rubber, polybutadiene rubber, isoprene-butadiene rubber (IBR), styrene butadiene rubber (SBR), styrene-isoprene rubber (SIR), and styrene-isoprene-butadiene rubber (SIBR). In some embodiments, the hydrocarbon solvent comprises an alkane. In some embodiments, the hydrocarbon solvent comprises hexane or cyclohexane. The surface-modified silica may be a silane-modified silica. In some embodiments, the silane comprises triethoxy(octyl)silane, 1,8-bistriethoxysilyloctane, (3-glycidoxypropyl)methyldiethoxysilane, (3-aminopropyl)triethoxysilane, N-(3-triethoxysilylpropyl)4,5-dihydroimidazole, (3-triethoxysilyl)propylsuccinic anhydride, N-(triethoxysilylpropyl)-O-polyethylene oxide urethane, (3-mercaptopropyl)triethoxysilane, S-(octanol)mercaptopropyltriethoxysilane, bis[3-(triethoxysilyl)propyl]disulfide and/or bis[3-(triethoxysilyl)propyl]tetrasulfide. The solution and the polymer cement may be mixed for a period of from 30 to 60 minutes. In some embodiments, the ultrasonic mixing is performed for a period of from 1 to 40 minutes. The ultrasonic mixing may be performed at room temperature. A masterbatch formed by the process is also disclosed.

These and other non-limiting aspects and/or objects of the disclosure are more particularly described below.

### BRIEF DESCRIPTION OF THE DRAWINGS

The following is a brief description of the drawings, which are presented for the purposes of illustrating the exemplary embodiments disclosed herein and not for the purposes of limiting the same.
FIG. 1 is a flow chart illustrating a process for producing a stable silica/hydrocarbon solution in accordance with some embodiments of the present disclosure.
FIG. 2 is a flow chart illustrating a process for producing a surface-modified silica in accordance with some embodiments of the present disclosure.
FIG. 3 is a flow chart illustrating a process for producing a masterbatch in accordance with some embodiments of the present disclosure.
FIG. 4 is a photograph of a mixture produced in Example 1.
FIG. 5 is a photograph of a mixture produced in Example 2.
FIG. 6 is a photograph of a gel-like mixture produced in Example 3.
FIG. 7 is a photograph of a solution produced in Example 4.
FIG. 8 is a photograph of a solution produced in Example 5.
FIG. 9 is a photograph of a milk-like solution produced in Example 6.
FIG. 10 is a photograph of a phase-separated product produced in Example 7.
FIG. 11 is a photograph of a stable, milk-like solution produced in Example 8.
FIG. 12 is a photograph of a milk-like solution produced in Example 9.
FIG. 13 is a photograph of a milk-like solution produced in Example 10.
FIG. 14 is a photograph of a milk-like solution produced in Example 11.
FIG. 15 is a photograph of a milk-like stable solution produced in Example 12.
FIG. 16 is a photograph of a milk-like stable solution produced in Example 13.
FIG. 17 is a photograph of a product formed in Example 16.
FIG. 18 is a photograph of a product formed in Example 17.
FIG. 19 is a photograph of a product formed in Example 18.
FIG. 20 is a photograph of a product formed in Example 19.

### DETAILED DESCRIPTION OF PREFERRED EMBODIMENTS OF THE INVENTION

The present disclosure may be understood more readily by reference to the following detailed description of desired embodiments included therein and the drawings. In the following specification and the claims which follow, reference will be made to a number of terms which shall be defined to have the following meanings.

Unless otherwise defined, all technical and scientific terms used herein have the same meaning as commonly understood by one of ordinary skill in the art. In case of conflict, the present document, including definitions, will control. Methods and materials are described below, although methods and materials similar or equivalent can be used in practice or testing of the present disclosure.

The singular forms "a," "an," and "the" include plural referents unless the context clearly dictates otherwise.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases that require the presence of the named ingredients/steps and permit the presence of other ingredients/steps. However, such description should be construed as also describing compositions, mixtures, or processes as "consisting of" and "consisting essentially of" the enumerated ingredients/steps, which allows the presence of only the named ingredients/steps, along with any impurities that might result therefrom, and excludes other ingredients/steps.

For the recitation of numeric ranges herein, each intervening number there between with the same degree of precision is explicitly contemplated. For example, for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated.

The present disclosure relates to processes for producing stable silica/hydrocarbon solutions, process for producing surface-modified silicas, and processes for producing masterbatches.

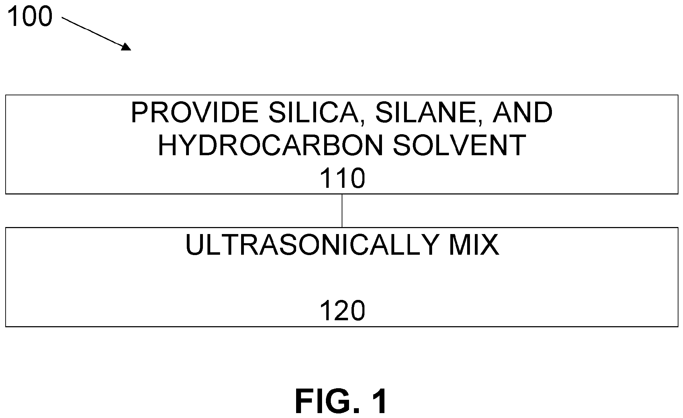

FIG. 1 is a flow chart illustrating a process for producing a stable silica/hydrocarbon solution 100 in accordance with some embodiments of the present disclosure.

The process 100 includes providing silica, a silane, and a hydrocarbon solvent 110; and ultrasonically mixing to form a stable solution 120. The ultrasonic mixing 120 may promote the silanization reaction between silica and silanes in hydrocarbon solvents.

The silica may include pyrogenic silica and/or precipitated silica.

The silica may have a BET (Brunauer-Emmett-Teller) surface area, as measured using nitrogen gas. In some embodiments, the BET surface area may be in the range of 40 to 600 square meters per gram, or in a range of 80 to 300 square meters per gram. The BET method of measuring surface area might be described, for example, in the Journal of the American Chemical Society, Volume 60, as well as ASTM D3037.

The silica may also be characterized by having a dibutylphthalate (DBP) absorption value in a range of 100 to 400, including 150 to 300.

Various commercially available silicas may be used, such as silicas commercially available from PPG Industries under the Hi-Sil trademark with designations 210, 243; silicas from Solvay with, for example, designations of Zeosil 1165MP^{™} and Zeosil 165GR^{™}; silicas from Evonik with, for example, designations VN2 and VN3; chemically treated (pre-hydrophobated) precipitated silicas such as for example Agilon^{™} 400 from PPG; silicas available from Rhodia, with, for example, designations of Z1165MP and Z165GR and silicas available from Degussa AG with, for example, designations VN2 and VN3.

The silane may include an alkoxyorganomercaptosilane, an alkylsilane, a bis-3(trialkoxysilylalkyl) polysulfide, and/or an alkoxysilane.

The alkoxysilane may be an ethoxysilane or a methoxysilane.

Examples of organomercaptosilanes include S-(octanol)mercaptopropyltriethoxysilane, 3-mercaptopropyltriethoxysilane, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

In some embodiments, the silane is selected from S-(octanol)mercaptopropyltriethoxysilane, bis[3-(triethoxysilyl)propyl]tetrasulfide, vinyltrimethoxysilane, vinyltriethoxysilane, 2-(3,4 epoxycyclohexyl) ethyltrimethoxysilane, 3-glycidoxypropyl methyldimethoxysilane, 3-glycidoxypropyl trimethoxysilane, 3-glycidoxypropyl methyldiethoxysilane, 3-glycidoxypropyl triethoxysilane, p-styryltrimethoxysilane, 3-methacryloxypropyl methyldimethoxysilane, 3-methacryloxypropyl trimethoxysilane, 3-methacryloxypropylmethyldiethoxysilane, 3-methacryloxypropyltriethoxysilane, 3-acryloxypropyl trimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3 dimethyl-butylidene) propylamine, N-phenyl-3-aminopropyltrimethoxysilane, N-(vinylbenzyl)-2-aminoethyl-3-aminopropyltrimethoxysilane hydrochloride, 3-ureidopropyltrialkoxysilane, 3-isocyanatepropyltriethoxysilane, tris-(trimethoxysilylpropyl)isocyanurate, 3-mercaptopropylmethyldimethoxysilane, and 3-mercaptopropyltrimethoxysilane. Mixtures of two or more silanes may also be utilized.

The hydrocarbon solvent may include one or more of an aromatic compound, a paraffinic compound, and/or a cycloparaffinnic compound.

In some embodiments, the hydrocarbon solvent contains from 4 to 10 carbon atoms.

The weight ratio of silica to silane may be in a range of from 6 to 33.3.

The ratio of hydrocarbon solvent (volume) to silica (weight) may be in a range of from 4 to 10 ml/g.

The ratio of hydrocarbon solvent (volume) to silane (weight) may be in a range of from 40 to 200 ml/g.

Examples of suitable hydrocarbon solvents include butane, pentane, isooctane, cyclohexane, n-hexane, benzene, toluene, xylene, ethylbenzene, and diethylbenzene. Mixtures of two or more hydrocarbon solvents may also be utilized.

Examples of ultrasonic mixers include 500- and/or 750-watt ultrasonic liquid processors (e.g., from Cole-Parmer - an Antylia Scientific company). The sonication probe may have a diameter in a range of from 5 to 50 mm, including from 10 to 30 mm. A standard Sonication probe having a diameter of 12.7 mm may be suitable for the sonication of volumes of 250 ml or a diameter of 25.4 mm probe may be suitable for the sonication of volumes up to 1000ml.

In an example of a method for preparing a silica/silane/hexane solution, 15 to 25 g of silica and 0.75 g to 2.5 g of silane (5 to 10 parts per hundred filler (phf), e.g., 8 phf) are added into a 300ml of glass bottle equipped with magnetic stirrer plus magnetic bar followed by 100 to 150 ml of hexane or cyclohexane. The mixture is sonicated with 44% amplitude and magnetic stirring at room temperature for 10 to 40 minutes.

In an example of a method for preparing a surface-modified silica, 15 to 25g of silica and 0.75 g to 2.5 g of silane (5 to 10 phf) are added into a 300 ml of glass bottle equipped with magnetic stirrer plus magnetic bar followed by 100 to 150 ml of hexane or cyclohexane. The mixture is sonicated with 44% amplitude and magnetic stirring at room temperature for 10 to 40 minutes. The solvent is removed by rotary evaporation followed by overnight air drying in a hood. The surface modified silica is obtained.

In an example of a method for preparing a silica-SSBR masterbatch material, 15 to 25 g of silica and 0.75 g to 2.5 g of silane (5 to 10 phf) are added into a 300 ml of glass bottle equipped with magnetic stirrer plus magnetic bar followed by 100 to 150 ml of hexane. The mixture is sonicated with 50% amplitude and magnetic stirring at room temperature for 10 to 40 minutes.

The silica/silane/hexane solution is mixed with SSBR polymer cement (by controlling Silica/SSBR ratio for a desired silica loading) and shaking with high speed for 30 to 60 minutes in a benchtop reciprocal shaker or mixed in a reactor with agitation (e.g., 200 to 500 rpm).

The Silica-SSBR-Masterbatch materials are obtained after directly drum drying of the above mixture or coagulated with isopropanol and the solid product is overnight air dried in a hood or steam stripping & drying.

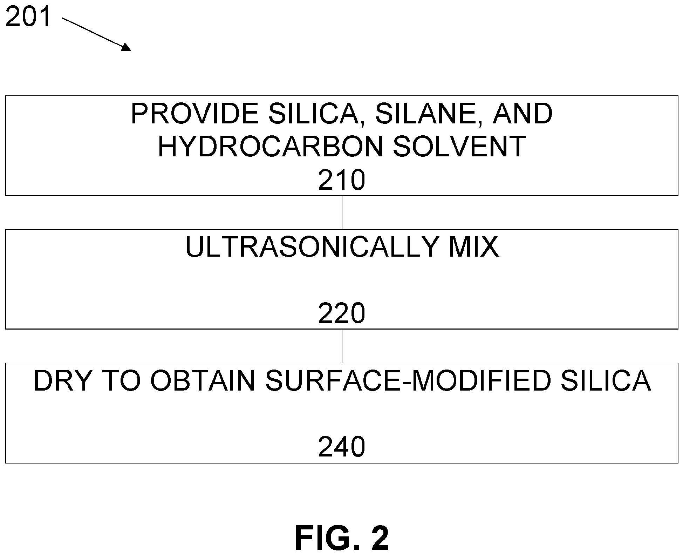

FIG. 2 is a flow chart illustrating a process for producing a surface-modified silica 201 in accordance with some embodiments of the present disclosure. The process 201 includes providing silica, a silane, and a hydrocarbon solvent 210; ultrasonically mixing to form a stable solution 220; and drying to form the surface-modified silica 240.

The providing 210 and ultrasonic mixing 220 maybe similar to or the same as the corresponding steps 110, 120 in FIG. 1.

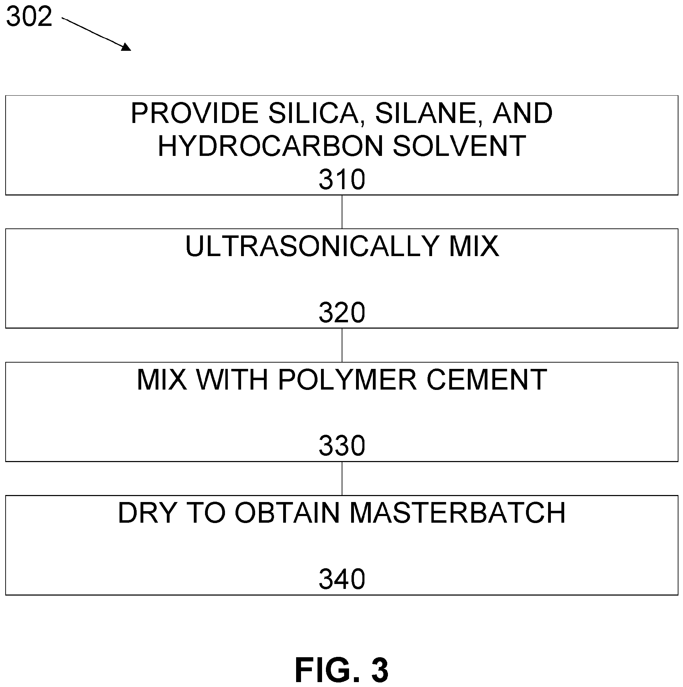

FIG. 3 is a flow chart illustrating a process for producing a masterbatch 302 in accordance with some embodiments of the present disclosure. The process 302 includes providing silica, a silane, and a hydrocarbon solvent 310; ultrasonically mixing to form a stable solution 320; mixing the solution with a polymer cement 330; and drying to form the surface-modified silica 340.

The providing 310 and ultrasonic mixing 320 maybe similar to or the same as the corresponding steps 110, 120 in FIG. 1.

The solution can be liquid/liquid phase mixed 330 with the polymer cement in the same solvent to achieve dispersion of silica in the rubber phase.

The polymer cement may contain a rubber (e.g., a diene-containing rubber). Non-limiting examples include natural rubber, synthetic polyisoprene rubber, polybutadiene rubber, isoprene-butadiene rubber (IBR), styrene butadiene rubber (SBR), styrene-isoprene rubber (SIR), and styrene-isoprene-butadiene rubber (SIBR).

The masterbatch may be compounded into a rubber composition.

The rubber composition may optionally include, in addition to the masterbatch, one or more rubbers or elastomers containing olefinic unsaturation. The additional rubber(s)/elastomer(s) may be the same as or different from the rubber(s)/elastomer(s) of the masterbatch. The phrases "rubber or elastomer containing olefinic unsaturation" or "diene-based elastomer" are intended to include both natural rubber and its various raw and reclaim forms as well as various synthetic rubbers. In the description, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR.

In some embodiments, at least one additional rubber is preferably of at least two of diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers, and emulsion polymerization prepared butadiene/acrylonitrile copolymers.

In some embodiments, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene-based rubbers.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber compound may include from 10 to 150 phr of silica. In another embodiment, from 20 to 80 phr of silica may be used. In some embodiments, all of the silica in the rubber compound is from the masterbatch. In other embodiments, additional silica is added during compounding.

The commonly employed siliceous pigments which may be used in the rubber compound include conventional pyrogenic and precipitated siliceous pigments (silica). In one embodiment, precipitated silica is used. The conventional siliceous pigments employed are precipitated silicas such as, for example, those obtained by the acidification of a soluble silicate, e.g., sodium silicate.

Commonly employed carbon blacks can be used as a conventional filler in an amount ranging from 10 to 150 phr. In another embodiment, from 20 to 80 phr of carbon black may be used. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including particulate fillers including ultra-high molecular weight polyethylene (UHMWPE), crosslinked particulate polymer gels including those disclosed in U.S. Pat. Nos. 6,242,534; 6,207,757; 6,133,364; 6,372,857; 5,395,891; or 6,127,488, and plasticized starch composite filler including but not limited to that disclosed in U.S. Pat. No. 5,672,639. Such other fillers may be used in an amount ranging from 1 to 30 phr.

In some embodiments, the rubber composition may contain a conventional sulfur containing organosilicon compound. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

In some embodiments, suitable sulfur containing organosilicon compounds include compounds disclosed in U.S. Pat. No. 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used include amines, disulfides, guanidines, thioureas, thiazoles, thiurams, sulfenamides, dithiocarbamates and xanthates. In one embodiment, the primary accelerator is a sulfenamide If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The terms "non-productive" and "productive" mix stages are well known to those having skill in the rubber mixing art. The rubber composition may be subjected to a thermomechanical mixing step. The thermomechanical mixing step generally comprises a mechanical working in a mixer or extruder for a period of time suitable in order to produce a rubber temperature between 140° C. and 190° C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire may be a race tire, passenger tire, aircraft tire, agricultural, earthmover, off-the-road, or truck tire. In one embodiment, the tire is a passenger or truck tire. The tire may also be a radial or bias.

The rubber composition may also be used in other products, including non-pneumatic tires, belts, hoses, shoes, airsprings, and engine mounts.

Vulcanization of the pneumatic tire may be carried out at conventional temperatures ranging from 100° C to 200° C. In one embodiment, the vulcanization is conducted at temperatures ranging from 110° C to 180° C. Any of the usual vulcanization processes may be used such as heating in a press or mold, heating with superheated steam or hot air. Such tires can be built, shaped, molded and cured by various methods which are known and will be readily apparent to those having skill in such art.

The following examples are provided to illustrate the devices and methods of the present disclosure.

### EXAMPLES

### Example 1

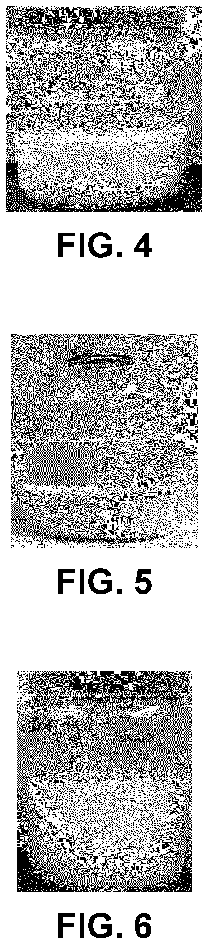

20g of silica and 2g of S-(octanol)mercaptopropyltriethoxysilane is added to 100g of hexane. The mixture is ultrasonicated in water-bath for 1 hour. The resultant two-phase mixture is shown in the photograph of FIG. 4.

### Example 2

20g of silica and 2g of S-(octanol)mercaptopropyltriethoxysilane is added to 100g of hexane. The mixture is agitated in 65 °C water-bath for 1 hour. The mixture is separated into two phases as shown in the photograph of FIG. 5.

### Example 3

20g of silica is added to 100g of hexane. The mixture is ultrasonic vibrated (Ultrasonic Liquid Processor from Sonics & Materials Inc.) for 15 minutes. A suspension is formed and gelled after 24 hours. The gel-like mixture is shown in the photograph of FIG. 6.

### Example 4

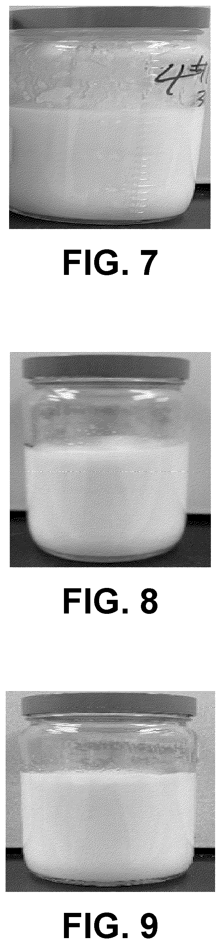

20g of silica and 2g of bis[3-(triethoxysilyl)propyl]tetrasulfide is added to 100g of hexane. The mixture is ultrasonic vibrated for 15 minutes. A milk like solution is formed. The solution is stable for at least a week and is shown in the photograph of FIG. 7. GC-MS has detected the silanization product of ethanol (C₂H₅OH).

### Example 5

20g of silica and 2g of S-(octanol)mercaptopropyltriethoxysilane is added to 100g of hexane. The mixture is ultrasonic vibrated for 15 minutes. A milk-like solution is formed. The solution is stable for at least a week and shown in the photograph of FIG. 8.

### Example 6

20g of silica and 2g of n-octyltriethoxysilane is added to 100g of hexane. The mixture is ultrasonic vibrated for 15 minutes. A milk-like solution is formed. The solution is stable for at least a week and shown in the photograph of FIG. 9.

### Example 7

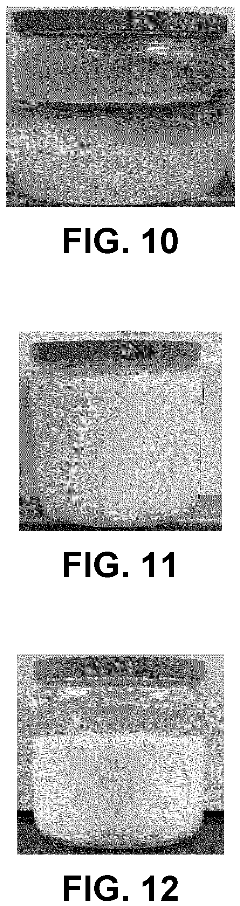

10.8g of silica (SiO₂) and 1g of S-(octanol)mercaptopropyltriethoxysilane is added to 121g of SSBR polymer cement(SBR=16.6g; 13.73% solid; Polymer/SiO₂ = 100/65). The mixture is ultrasonic vibrated for 15minutes and shaken for an additional 30 minutes. The silica is phase separated from the polymer cement as shown in the photograph of FIG. 10.

### Example 8

85g of silica/hexane solution (contains 13.9g of SiO₂) from Example 5 is mixed with 140g of SSBR polymer cement (13.73% solid in hexane) (SBR/SiO₂=100/70) and shaken for 10 minutes at room temperature. A stable milk-like solution is formed and shown in the photograph of FIG. 11.

### Example 9

25g of silica (BET surface area: 160m²/g) and 2g of n-Octyltriethoxysilane is added to 120g of hexane. The mixture is ultrasonic vibrated for 15 minutes. A milk-like solution is formed. The solution is shown in the photograph of FIG. 12.

### Example 10

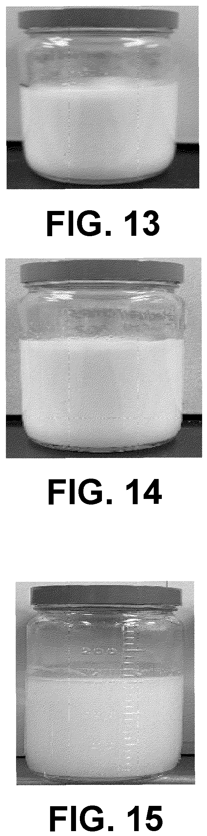

25g of silica (BET surface area: 160m²/g) and 2g of S-(octanol)mercaptopropyltriethoxysilane is added to 120g of hexane. The mixture is ultrasonic vibrated for 15 minutes. A milk-like solution is formed. The solution is shown in the photograph of FIG. 13.

### Example 11

25g of silica (BET surface area: 160m²/g) and 2g of bis[3-(triethoxysilyl)-propyl]tetrasulfide is added to 120g of hexane. The mixture is ultrasonic vibrated for 15 minutes. A milk like solution is formed. The solution is shown in the photograph of FIG. 14.

### Example 12

25g of silica (BET surface area: 160m²/g) and 2g of bis[3-(triethoxysilyl)propyl]-disulfide (CAS: 56706-10-6; d=1.025) was added to 120g of hexane and ultrasonication for 15min. A milk-like stable solution is formed and shown in the photograph of FIG. 15.

### Example 13

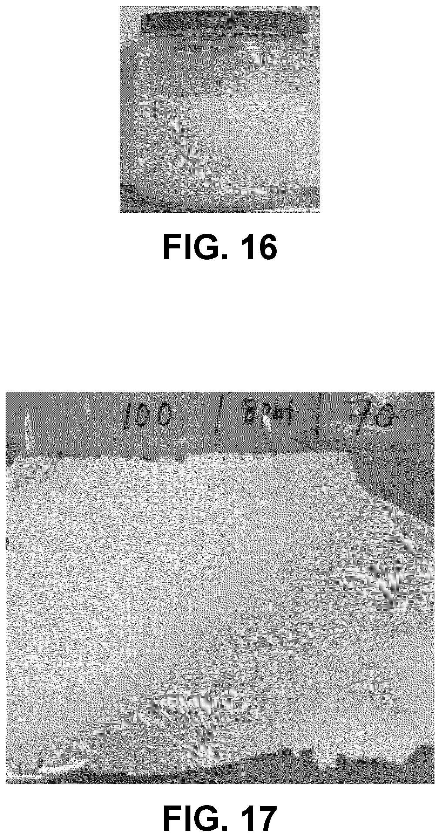

20g of silica (BET surface area: 210m²/g), and 2g of bis[3-(triethoxysilyl)propyl]-disulfide (CAS: 56706-10-6; d=1.025) was added to 110g of hexane and ultrasonication for 15min. A milk-like stable solution is formed and shown in the photograph of FIG. 16.

### Examples 14 and 15

Non-functionalized SSBR and vinylsilane-functional SSBR were synthesized is Examples 14 and 15, respectively. Details concerning these polymers are summarized in the table below:

| Polymer ID | Non-Fn-SSBR (Example 14) | Fn-SSBR (Example 15) |
|---|---|---|
| Cement Quantity | 2 gallons | 2 gallons |
| Base Mooney | 36.1 | 48.4 |
| %Solid | 14.7 | 14.7 |
| %Styrene | 20.5 | 20.1 |
| %Vinyl | 47.7 | 49.3 |
| Tg (°C) | -22.6 | -22.9 |

### Example 16

250g of silica/ S-(octanol)mercaptopropyltriethoxysilane (8phf) /hexane solution [contains 45g of silica (BET surface area: 160m²/g) is mixed with 440g of non-functional-SSBR polymer cement (14.7% solid in hexane) (SBR/SiO₂ = 100/70) and shaken for 30 minutes at room temperature. The mixture was directly drum dried or coagulated with isopropanol and the solid product is overnight air dried in a hood. The product was labeled as Non-Fn-SBR/Silane/Silica (100/8phf/70) and is shown in the photograph of FIG. 17.

### Example 17

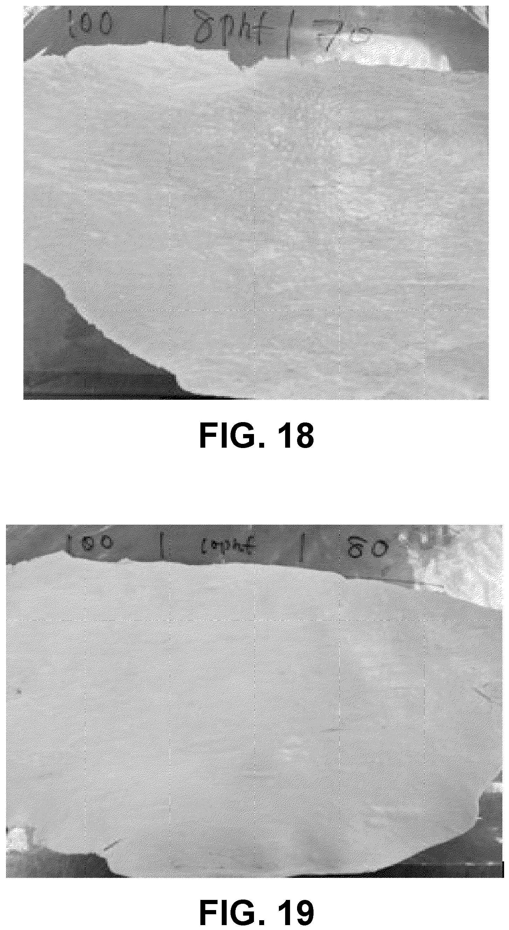

250g of silica/ S-(octanol)mercaptopropyltriethoxysilane (8phf) /hexane solution [contains 45g of silica (BET surface area: 160m²/g) is mixed with 440g of Silane-Functional-SSBR polymer cement (14.7% solid in hexane) (SBR/SiO₂ = 100/70) and shaken for 30 minutes at room temperature. The mixture was directly drum dried or coagulated with isopropanol and the solid product is overnight air dried in a hood. The product was labeled as FN-SBR/Silane/Silica (100/8phf/70) and is shown in the photograph of FIG. 18.

### Example 18

255g of silica/ S-(octanol)mercaptopropyltriethoxysilane (10phf) /hexane solution containing 45 g of silica (BET surface area: 160m²/g) is mixed with 383g of Silane-Functional-SSBR polymer cement (14.7% solid in hexane) (SBR/SiO₂ = 100/80) and shaken for 30 minutes at room temperature. The mixture was directly drum dried or coagulated with isopropanol and the solid product is overnight air dried in a hood. The product was labeled as FN-SBR/Silane/Silica (100/10phf/80) and is shown in the photograph of FIG. 19.

### Example 19

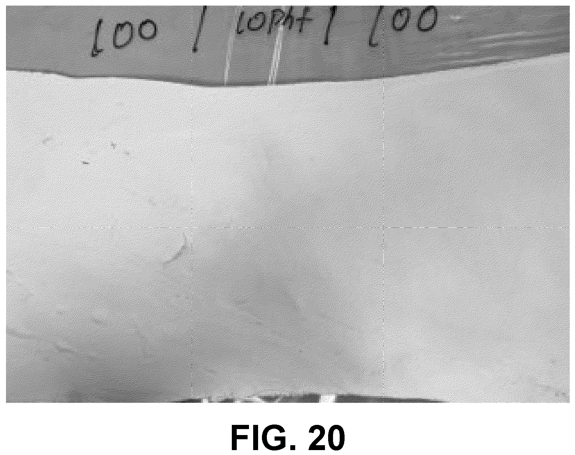

255g of silica/ S-(octanol)mercaptopropyltriethoxysilane (10phf) /hexane solution containing 45 g of silica (BET surface area: 160m²/g) is mixed with 307g of Silane-Functional-SSBR polymer cement (14.7% solid in hexane) (SBR/SiO₂ = 100/100) and shaken for 30 minutes at room temperature. The mixture was directly drum dried or coagulated with isopropanol and the solid product is overnight air dried in a hood. The product was labeled as FN-SBR/Silane/Silica (100/10phf/100) and is shown in the photograph of FIG. 20.

## Claims

1. A process for producing a stable solution comprising silica in a hydrocarbon solvent, the process comprising: ultrasonically mixing silica and a silane in the hydrocarbon solvent.

2. A process for producing a surface-modified silica, the process comprising: ultrasonically mixing silica and a silane in a hydrocarbon solvent to form a solution; and drying the solution to obtain the surface-modified silica.

3. A process for producing a surface-modified silica, the process comprising: drying a stable solution comprising surface-modified silica in a hydrocarbon solvent to obtain the surface-modified silica.

4. The process of claim 1, 2 or 3, wherein the hydrocarbon solvent comprises an alkane.

5. The process of claim 1, 2 or 3, wherein the hydrocarbon solvent comprises hexane or cyclohexane.

6. The process of at least one of the previous claims, wherein the ultrasonic mixing is performed for a period of from 1 to 40 minutes.

7. The process of at least one of the previous claims, wherein the ultrasonic mixing is performed at room temperature.

8. The process of at least one of the previous claims, wherein the silane comprises a triethoxysilane, triethoxy(octyl)silane, 1,8-bistriethoxysilyloctane, (3-glycidoxypropyl)methyldiethoxysilane, (3-aminopropyl)triethoxysilane, N-(3-triethoxysilylpropyl)4,5-dihydroimidazole, (3-triethoxysilyl)propylsuccinic anhydride, N-(triethoxysilylpropyl)-O-polyethylene oxide urethane, (3-mercaptopropyl)triethoxysilane, S-(octanol)mercaptopropyltriethoxysilane, bis[3-(triethoxysilyl)propyl]disulfide and/or bis[3-(triethoxysilyl)propyl]tetrasulfide.

9. The process of claim 3, wherein the surface-modified silica is silane-modified silica.

10. A stable solution produced by the process of claim 1.

11. A surface-modified silica produced by the process of claim 2 or 3.
